# EUROPÄISCHE PATENTSCHRIFT

(11) **EP 2 711 585 B1**
(45) Veröffentlichungstag und Bekanntmachung des Hinweises auf die Patenterteilung: **26.08.2015**
(21) Anmeldenummer: 12006611.3
(22) Anmeldetag: 20.09.2012
(51) Int. Cl.: F16F 13/10, F16F 13/26

(54) **Hydrolager**
Hydraulic support
Support hydraulique

(43) Veröffentlichungstag der Anmeldung: 26.03.2014
(73) Patentinhaber: TrelleborgVibracoustic GmbH, 64293 Darmstadt (DE)
(72) Erfinder: Holz, Roland, 64658 Fuerth (DE); Philipp, Jan, 64683 Einhausen (DE); Goelz, Stefan, 69469 Weinheim (DE)
(74) Vertreter: Flügel Preissner Kastel Schober

(56) Entgegenhaltungen:
- EP-A1- 0 840 035
- EP-A1- 1 526 303
- DE-A1- 19 807 868

## Beschreibung

### Technisches Gebiet

Die Erfindung betrifft ein Hydrolager, umfassend ein Traglager und ein Auflager, die durch eine im Wesentlichen hohlkegelförmig ausgebildete Tragfeder aus einem gummielastischen Werkstoff miteinander verbunden sind und einen Arbeitsraum und einen Ausgleichsaum, die mit Dämpfungsflüssigkeit gefüllt und auf ihren einander axial zugewandten Seiten durch eine Trennwand räumlich voneinander getrennt und durch einen in der Trennwand angeordneten Dämpfungskanal flüssigkeitsleitend miteinander verbunden sind, wobei die Trennwand als Düsenkäfig ausgebildet ist, mit zwei mit axialem Abstand benachbart zueinander angeordneten Düsenscheiben, wobei in dem durch den Abstand gebildeten Spalt eine Membran aus einem gummielastischen Werkstoff angeordnet ist und wobei die Beweglichkeit der Membran durch eine Schaltvorrichtung schaltbar ist, wobei die Schaltvorrichtung eine Klemmscheibe und eine Klemmfeder mit einer ersten federkraft umfasst, die im Spalt angeordnet sind, wobei die Klemmscheibe axial beanchbart zur Membran angeordent ist, wobei die Klemmfeder auf der der Membran axial abgewandten Seite der Klemmscheibe angeordnet ist und mit dieser in einer Wirkverbindung steht und wobei die Klemmscheibe durch die Klemmfeder zur Arretierung der Membran an die Membran anlegbar ist.

### Stand der Technik

Ein solches Hydrolager ist aus der DE 198 07 868 A1 bekannt. Die Klemmfeder besteht dabei aus einem elastomeren Werkstoff und ist bedarfsweise mit einer Armierung versehen.

Aus der EP 0 80 035 A1 ist ein schaltbare Hydrolager bekannt, bei dem die in einem Düsenkäfig angeordnete Membran durch eine mit Differenzdruck betätigbare Schaltvorrichtung bedarfsweise arretierbar ist. Die Schaltvorrichtung ist durch eine metallische Klammer mit einer axial zwischen den Düsenscheiben beweglich angeordneten Klemmscheibe arretierbar.

Aus der DE 41 41 332 A1 ist ein schaltbares Hydrolager bekannt, bei dem die Schaltvorrichtung durch eine druckmittelbaufschlagbare Steuerdruckdose gebildet ist. Die Schaltvorrichtung umfasst einen als Stellglied ausgebildeten Kolben, der pneumatisch betätigbar ist. Die Steuerdruckdose ist durch eine zumindest teilweise elastisch nachgiebige erste Ringmembran begrenzt, die den Kolben und die Steuerdruckdose gegenüber dem Gehäuse abdichtet. Das Stellglied ist, in Abhängigkeit von den jeweiligen Gegebenheiten des Anwendungsfalles, mit Überdruck oder Unterdruck beaufschlagbar. Das Stellglied ist axial in Richtung der eingeleiteten Schwingungen hin und her beweglich, um eine zentral in der Trennwand angeordnet erste Durchbrechung, die als Tilgerkanal ausgebildet ist, bedarfsweise zu öffnen oder zu verschließen.

### Darstellung der Erfindung

Der Erfindung liegt die Aufgabe zugrunde, dass Druckverluste und Verwirbelungen der Strömung im Hydrolager minimiert sind und dass das Hydrolager eine gute Hochfrequenzakustik durch eine große wirksame Membranfläche aufweist.

Die Gefahr, dass sich die Klemmfeder während des Schaltvorgangs innerhalb des Düsenkäfigs unerwünscht verklemmt, soll ausgeschlossen sein.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass die Klemmfeder als kreisringförmige Wellenfeder ausgebildet ist und dass die Wellenfeder an einer Umfangsstelle geschlitzt ausgebildet ist. Hydrolager können zur Abstützung von Verbrennungskraftmaschinen zur Anwendung gelangen. Im Leerlauf der Verbrennungskraftmaschine ist die Membran durch die Klemmfeder mittels der Klemmscheibe im Düsenkäfig arretiert, das heißt nicht schwingfähig. Die Klemmfeder und die Klemmscheibe befinden sich innerhalb des Düsenkäfigs, wobei die Klemmfeder und die Klemmscheibe keine mechanisch starre Verbindung zu einer Betätigungsvorrichtung der Schaltvorrichtung aufweisen. In diesem Betriebszustand kann eine Tilgerbohrung, die die Trennwand durchdringt und sich vom Arbeitsraum in den Ausgleichsraum erstreckt, offen sein, um leerlaufbedingte Schwingungen der Verbrennungskraftmaschine zu tilgen.

Bei Drehzahlen oberhalb der Leerlaufdrehzahl der Verbrennungskraftmaschine ist die Membran demgegenüber schwingfähig innerhalb des Düsenkäfigs angeordnet, wobei diese Schwingfähigkeit dadurch erreicht wird, dass die Klemmscheibe gegen die Federkraft der Klemmfeder bewegt und die Membran dadurch freigegeben wird. Eine in der Trennwand angeordnete Tilgerbohrung ist in diesem Betriebszustand verschlossen.

Durch eine Minimierung der Strömungsumlenkung der Dämpfungsflüssigkeit im Hydrolager sind die Druckverluste ebenfalls minimiert, ebenso wie die Verwirbelungen der Strömung. Die Wirksamkeit des Hydrolagers wird dadurch entsprechend verbessert.

Die Klemmfeder ist durch eine kreisringförmige Wellenfeder ausgebildet. Wellenfedern sind in unterschiedlichsten Abmessungen kostengünstig verfügbar, funktionieren während einer langen Gebrauchsdauer zuverlässig gleichbleibend gut und stellen dadurch gleichbleibend gute Gebrauchseigenschaften des Hydrolagers während einer langen Gebrauchsdauer sicher.

Die Wellenfeder ist an einer Umfangstelle geschlitzt ausgebildet. Die Gefahr, dass sich die Wellenfeder während eines Schaltvorgangs innerhalb des Düsenkäfigs verklemmt, ist durch die geschlitzte Ausführung ausgeschlossen.

Die Klemmfeder kann durch zumindest zwei kreisringförmig ausgebildete Wellenfedern gebildet sein, wobei die Wellenfedern in eine funktionstechnischen Parallelschaltung angeordnet sind. Eine solche Ausgestaltung ist von Vorteil, wenn große Klemmkräfte zur Klemmung der Membran bereitgestellt werden müssen.

Die Klemmfeder kann bevorzugt in die Klemmscheibe integriert ausgebildet sein. Die Düsenscheiben des Düsenkäfig brauchen deshalb keine spezielle Ausgestaltung zur Aufnahme der Klemmscheibe aufzuweisen und sind daher einfach und kostengünstig herstellbar.

Die Schaltvorrichtung kann eine Druckfeder mit einer zweiten Federkraft umfassen, wobei die zweite Federkraft der ersten Federkraft entgegen gerichtet ist und wobei die Druckfeder auf der der Klemmfeder axial abgewandten Seite der Klemmscheibe angeordnet ist und mit der Klemmscheibe in einer Wirkverbindung steht. Die zweite Federkraft der Druckfeder ist variabel und kann durch eine Betätigungsvorrichtung eingestellt werden. Die erste Federkraft der Klemmfeder kann demgegenüber nur mittelbar durch die variable zweite Federkraft der Druckfeder beeinflusst werden.

Die erste Federkraft kann z. B. bevorzugt 50 Newton, die maximale zweite Federkraft z. B. bevorzugt 100 Newton betragen.

Durch die einstellbare zweite Federkraft ergibt sich eine Differenzkraft, die auf die Klemmscheibe wirkt. Beträgt die zweite Federkraft 100 Newton und die erste Federkraft 50 Newton, vermag die Klemmfeder die Klemmscheibe nicht an die Membran anzudrücken und die Membran in ihrer Position innerhalb des Düsenkäfigs zu arretieren. Die Membran ist in diesem Betriebszustand innerhalb des Düsenkäfigs schwingfähig.

Wird die zweite Federkraft demgegenüber durch die Betätigungsvorrichtung soweit reduziert, dass diese unterhalb der ersten Federkraft der Klemmfeder liegt, wird die Membran durch die größere erste Federkraft mittels der Klemmscheibe an die axial benachbart angrenzende Düsenscheibe angedrückt und dort arretiert.

Zur Beeinflussung der Größe der zweiten Federkraft kann es vorgesehen sein, dass die Schaltvorrichtung als Betätigungsvorrichtung eine Unterdruckdose mit einer dritten Federkraft und mit einem Unterdruckanschluss umfasst, wobei die Unterdruckdose auf der der Trennwand axial abgewandten Seite des Ausgleichsraums angeordnet ist und wobei die dritte Federkraft, zur zumindest teilweisen Aufhebung der zweiten Federkraft, der zweiten Federkraft entgegen gerichtet ist. Wie zuvor bereits beschrieben, würde es für eine Funktion des Hydrolagers genügen, wenn die Summe aus der ersten Federkraft und der maximalen dritten Federkraft größer als die zweite Federkraft wäre. Dann wäre sichergestellt, dass bei geschalteter Schaltvorrichtung die Klemmscheibe die Membran an der Düsenscheibe, die auf der der Klemmscheibe axial abgewandten Seite der Membran angeordnet ist, arretiert.

Bevorzugt kann der Betrag der dritten Federkraft dem Betrag der zweiten Federkraft entsprechen. Durch Betätigung der Unterdruckdose hebt deren dritte Federkraft die zweite Federkraft der Druckfeder vollständig auf, so dass die Membran durch die erste Federkraft der Klemmfeder zuverlässig an der benachbarten Düsenscheibe arretiert wird.

Die Unterdruckdose kann auf der der Klemmscheibe axial zugewandten Seite durch eine ringförmige Stellfeder aus gummielastischem Werkstoff und auf der der Klemmscheibe axial abgewandten Seite durch einen Lagerdeckel begrenzt sein. Die Unterdruckdose ist im Bereich einer Stirnseite des Hydrolagers angeordnet. Die axialen Verstellwege zum Arretieren und Lösen der Membran zwischen den Düsenscheiben sind nur vergleichsweise gering, so dass auch die Unterdruckdose kompakte Abmessungen insbesondere in axialer Richtung aufweist. Die Stellfeder nimmt die Bewegungen der Unterdruckdose auf.

Der Lagerdeckel kann eine erste Ausnehmung aufweisen, in der der Unterdruckanschluss angeordnet ist. Der Lagerdeckel bildet einen festen Bestandteil des Gehäuses des Hydrolagers und führt deshalb keine Relativbewegungen zum Gehäuse aus. Zusammen mit dem Lagerdeckel ist deshalb auch der Unterdruckanschluss relativ ortsfest, bezogen auf das Gehäuse. Das Anschließen einer Unterdruckleitung an den Unterdruckanschluss ist deshalb einfach und problemlos möglich.

Die Druckfeder ist bevorzugt in der Unterdruckdose angeordnet und auf der der Klemmscheibe axial zugewandten Seite von einem Stütztopf umschlossen. Der Stütztopf nimmt die Feder auf, so dass die zweite Federkraft der Druckfeder nicht durch die Federwindungen selbst direkt auf die Klemmscheibe übertragen wird, sondern mittels des Stütztopfs. Eine unerwünscht hohe mechanische Belastung der Klemmscheibe durch die Windungen der Feder und die Gefahr von Funktionsstörungen, z. B. durch eine verkantete/verkippte Druckfeder sind dadurch auf ein Minimum begrenzt.

Der Stütztopf kann einen kreisringförmigen Bund aufweisen, der die Öffnung des Stütztopfs umfangsseitig umschließt.

Der Bund kann außenumfangsseitig mit dem Innenumfang der Stellfeder gasdicht verbunden sein, wobei die Stellfeder außenumfangsseitig mit dem Lagerdeckel gasdicht verbunden ist. Eine dauerhaft gasdichte Verbindung der Stellfeder mit den radial innen und radial außen angrenzenden Bauteilen ist wichtig für eine zuverlässige Funktion der Schaltvorrichtung. Die Verstellwege zum Arretieren oder Lösen der Membran sind nur klein, so dass eine exakte Betätigung der Stellvorrichtung besonders wichtig ist. Die gasdichte Verbindung der Stellfeder am Bund kann beispielsweise durch Vulkanisation erfolgen, die Festlegung des Außenumfangs der Stellfeder im Lagerdeckel durch eine gasdichte Pressverbindung.

Der Stütztopf kann zumindest auf seiner der Unterdruckdose axial abgewandten Seite von einer Abdeckung aus gummielastischem Werkstoff abgedeckt sein, die die der Klemmfeder axial abgewandten Stirnseite der Klemmscheibe unmittelbar anliegend berührt. Die elastisch nachgiebige Abdeckung verhindert die Übertragung unerwünschter Geräusche bei Betätigung der Schaltvorrichtung.

Die Abdeckung kann einstückig ineinander übergehend und materialeinheitlich mit einer rollbalgförmigen Abschlussmembran ausgebildet sein, die den Ausgleichsraum auf der der Trennwand axial abgewandten Seite begrenzt. Das Hydrolager weist dadurch einen insgesamt einfachen und teilearmen Aufbau auf, außerdem bedarf es durch eine solche Ausgestaltung keiner separaten Abdichtungen. Die Abschlussmembran ist radial außenseitig an der Trennwand und/oder dem Gehäuse flüssigkeitsdicht festgelegt und weist radial innerhalb dieser Festlegung keine Durchtrennung auf. Durch die Einstückigkeit ist keine separate Abdichtung des Ausgleichsraums gegenüber der Unterdruckdose und gegenüber der Umgebung nötig.

Die Abdeckung kann mit dem Boden des Stütztopfs formschlüssig verbunden sein. Die Montage des Hydrolagers ist dadurch vereinfacht. Eine vergleichsweise aufwändige stoffschlüssige Festlegung der Abdeckung am Stütztopf ist nicht erforderlich.

Die Abdeckung kann einen pilzförmig ausgebildeten Rastvorsprung aufweisen, der sich in axialer Richtung erstreckt, wobei der Rastvorsprung in eine zweite Ausnehmung im Boden des Stütztopfs einschnappbar ist. Die Verbindung der Abdeckung mit der Steuerdruckdose ist dadurch besonders einfach. Außerdem könnte die Unterdruckdose bedarfsweise einfach vom Hydrolager getrennt werden. Der Rastvorsprung ist flüssigkeitsdicht in der Ausnehmung angeordnet. Die Druckfeder kann als Schraubendruckfeder ausgebildet sein. Auch Schraubendruckfedern sind in unterschiedlichen Größen mit unterschiedlichen Federkennlinien kostengünstig verfügbar, so dass das Hydrolager insgesamt kostengünstig herstellbar ist.

Die Klemmfedern und/oder die Druckfedern bestehen bevorzugt aus einem metallischen Werkstoff. Derartige Werkstoffe sind resistent gegen die sie umgebenden Medien, wie beispielsweise die Dämpfungsflüssigkeit oder die Luft zur Betätigung der Unterdruckdose. Klemmfedern und/oder Druckfedern aus metallischen Werkstoffen sind kostengünstig verfügbar.

### Kurzbeschreibung der Zeichnungen

Vier Ausführungsbeispiele des erfindungsgemäßen Hydrolagers werden nachfolgend anhand der Figuren 1 bis 6 näher erläutert. Diese zeigen jeweils in schematischer Darstellung:
- Fig. 1: ein erstes Ausführungsbeispiel eines nicht-geschalteten Hydrolagers mit geschlossener Tilgerbohrung, das einen externen Druckanschlag aufweist,
- Fig. 2: das erste Ausführungsbeispiel des geschalteten Hydrolagers mit offener Tilgerbohrung, das einen externen Druckanschlag aufweist,
- Fig. 3: ein zweites Ausführungsbeispiel, bei dem das nicht-geschaltete Hydrolager eine geschlossene Tilgerbohrung und einen internen Druckanschlag aufweist,
- Fig. 4: das zweite Ausführungsbeispiel, bei dem das geschaltete Hydrolager eine offene Tilgerbohrung und einen internen Druckanschlag aufweist,
- Fig. 5: einen Ausschnitt aus einem dritten Ausführungsbeispiel eines nicht-geschalteten Hydrolagers mit internem Druckanschlag, bei dem für große Hydrolager-Durchmesser zwei Wellenfedern in einer funktionstechnischen Parallelschaltung angeordnet sind und
- Fig. 6: ein viertes Ausführungsbeispiel, bei dem im Lochbild des Düsenkäfigs ein umlaufender Steg vorgesehen ist, der zur Abstützung der Welfenfeder dient.

### Ausführung der Erfindung

Jedes der gezeigten Hydrolager umfasst ein Traglager 1 und ein Auflager 2, die durch die hohlkegelförmig ausgebildete Tragfeder 3 aus gummielastischem Werkstoff miteinander verbunden sind. Das Traglager 1 wird durch den Kern des Hydrolagers, das Auflager 2 durch das Gehäuse des Hydrolagers gebildet. Innerhalb des Hydrolagers ist ein mit der Dämpfungsflüssigkeit 6 gefüllter Arbeitsraum 4 angeordnet, der durch das Traglager 1 und die Trennwand 7 in axialer Richtung beiderseits begrenzt ist. Der Ausgleichsraum 5 ist in axialer Richtung beiderseits durch die Trennwand 7 und die rollbalgförmig ausgebildete Abschlussmembran 30 begrenzt, wobei die Abschlussmembran 30 derart elastisch nachgiebig ist, dass aus dem Arbeitsraum 4 verdrängtes Volumen an Dämpfungsflüssigkeit 6 durch den Dämpfungskanal 8 in den Ausgleichsraum 5 gelangt ohne dass sich der Druck im Ausgleichsraum 5 wesentlich verändert; der Ausgleichsraum 5 ist im Wesentlichen drucklos volumenaufnehmend ausgebildet.

Zur Dämpfung tieffrequenter, großamplitudiger Schwingungen, wie sie beispielsweise beim Überfahren von Bodenunebenheiten entstehen, wird die Dämpfungsflüssigkeit 6 vom Arbeitsraum 4 durch den Dämpfungskanal 8 in den Ausgleichsraum 5 und anschließend vom Ausgleichsraum 5 durch den Dämpfungskanal 8 wieder zurück in den Arbeitsraum 4 gefördert. Die tieffrequenten, großamplitudigen Schwingungen werden dadurch gedämpft.

Die Trennwand 7 ist als Düsenkäfig 9 ausgebildet und umfasst zwei mit axialem Abstand benachbart zueinander angeordnete Düsenscheiben 10, 11. In dem durch den Abstand gebildeten Spalt 12 ist die Membran 13 aus gummielastischem Werkstoff angeordnet. Zur Isolierung höherfrequenter, kleinamplitudiger Schwingungen, wie sie beispielsweise durch Motorvibrationen oberhalb der Leerlaufdrehzahl entstehen, schwingt die Membran 13 innerhalb des Spalts 12 axial in Richtung der eingeleiteten Schwingungen.

Die Unterdruckdose 20 ist axial einerseits durch den Lagerdeckel 24 und axial andererseits durch die Stellfeder 23, die aus gummielastischem Werkstoff besteht, begrenzt. Im Lagerdeckel 24 ist die erste Ausnehmung 25 angeordnet, in der sich der Unterdruckanschluss 22 zum Anschließen einer nicht dargestellten Saugpumpe befindet.

Die Abschlussmembran 30, die den Ausgleichsraum 5 in Richtung der Unterdruckdose 20 begrenzt, ist einstückig ineinander übergehend mit der Abdeckung 29 verbunden, wobei die Abdeckung 29 mit dem Boden 31 des Stütztopfs 26 durch eine Rastverbindung einschnappbar verbunden ist. Die Rastverbindung wird durch einen pilzförmig ausgebildeten Rastvorsprung 32 der Abdeckung 29 gebildet, wobei der Rastvorsprung 32 in die zweite Ausnehmung 33 im Boden 31 des Stütztopfs 26 einschnappbar ist. Am Bund 27 des Stütztopfs ist außenumfangsseitig die Stellfeder 23 gasdicht festgelegt.

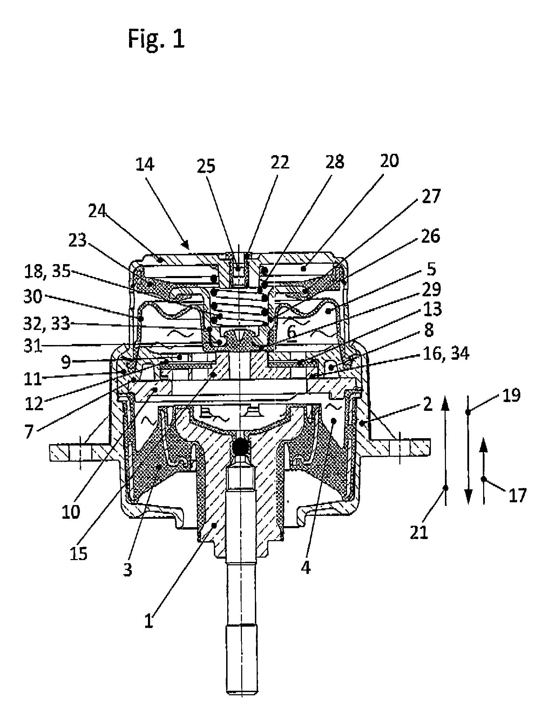

In den Figuren 1, 3 und 5 ist der Betriebszustand eines Hydrolagers während des Betriebs einer Verbrennungskraftmaschine oberhalb der Leerlaufdrehzahl gezeigt. Die Hydrolager sind jeweils mit nicht-geschalteter Schaltvorrichtung 14 gezeigt. Die Membran 13 ist schwingfähig innerhalb des Düsenkäfigs 9 angeordnet. Die Dämpfung tieffrequenter, großamplitudiger Schwingungen und die Isolierung höherfrequenter, kleinamplitudiger Schwingungen erfolgt, wie zuvor beschrieben.

Die Tilgerbohung 36 ist durch die Abdeckung 29 verschlossen, Unterdruck in der Unterdruckdose 20 liegt nicht an, so dass die dritte Federkraft 21 null ist und damit keinen Einfluss auf die erste 17 und zweite Federkraft 19 hat. Diebezogen auf die erste Federkraft 17 - etwa doppelt so große zweite Federkraft 19 bewirkt, dass die erste Federkraft 17 vollständig überlagert wird, die Klemmfeder 16 mit etwa 50 Newton komprimiert wird und dadurch die Membran 13 freibeweglich innerhalb des Düsenkäfigs 9 angeordnet ist.

Anstelle der Druckfeder 18 kann auch ein schaltbarer Elektromagnet zur Anwendung gelangen. Der wäre dann von Vorteil, wenn das Hydrolager z. B. in Hybrid- oder Elektrofahrzeugen zur Anwendung gelangt und kein ausreichend großer Differenzdruck zur Betätigung der Unterdruckdose 20 zur Verfügung steht.

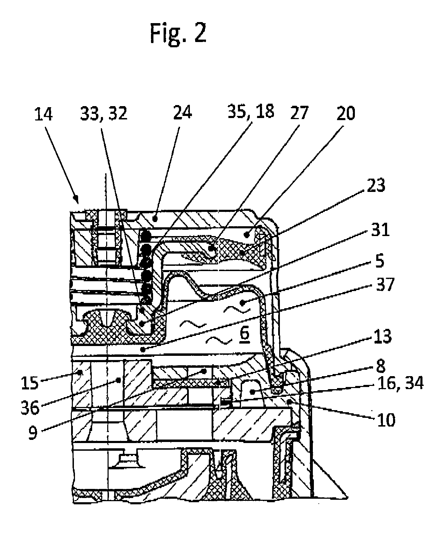

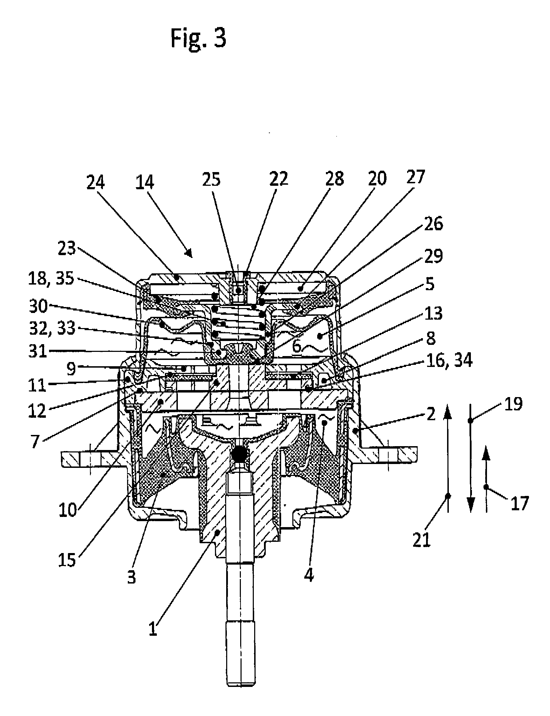

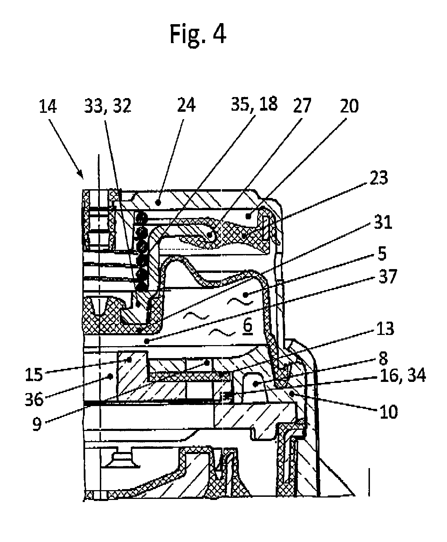

In den Figuren 2 und 4 ist der Betriebszustand der Hydrolager aus den Fig. 1 und 3 während des Betriebs einer Verbrennungskraftmaschine im Leerlauf gezeigt. Die Schaltvorrichtung 14 ist geschaltet. Die Membran 13 ist innerhalb des Düsenkäfigs 9 dadurch arretiert, dass die Membran 93 durch die Klemmfeder 16 mittels der Klemmscheibe 15 an der oberen Düsenscheibe 10 festgelegt ist.

Innerhalb der Unterdruckdose 20 herrscht ein Unterdruck, der durch eine hier nicht dargestellte Unterdruckpumpe mittels des Unterdruckanschlusses 22 angelegt wird. Die Wellenfeder 34 drückt axial in Richtung der Membran 13 auf die Klemmscheibe 15, wobei die Klemmscheibe 15 die Membran 13 an die obere Düsenscheibe 10 andrückt und dadurch im Düsenkäfig 9 arretiert.

Um Motorvibrationen bei Leerlaufdrehzahl wirkungsvoll tilgen zu können, ist es sinnvoll, die Membran 13 innerhalb des Düsenkäfigs 9 zu arretieren, die Membran 13 ist dadurch nicht mehr schwingfähig innerhalb des Spalts 12 angeordnet.

Die Tilgerbohrung 36 ist offen.

Die Stellfeder 23 ist durch das Vakuum der Unterdruckdose 20 so verformt, dass der Freiraum 37 eine Höhe von 3 mm bis 15 mm aufweist, abhängig vom Anwendungsfall.

Das Arretieren oder Lösen der Membran 13 innerhalb des Düsenkäfigs 9 erfolgt durch die Schaltvorrichtung 14, die in den hier gezeigten Ausführungsbeispielen die Klemmscheibe 15, die Klemmfeder 16, die Druckfeder 18 und die Unterdruckdose 20 umfasst. Die erste Federkraft 17 der Klemmfeder 16 und die dritte Federkraft 21 der Unterdruckdose 20 wirken in gleicher Richtung, die zweite Federkraft 19 der Druckfeder 18 in entgegengesetzter Richtung. Zur Betätigung der Schaltvorrichtung 14 wird die dritte Federkraft 21 zwischen einem Minimalwert und einem Maximalwert, abhängig vom Unterdruck, der in der Unterdruckdose 20 herrscht, variiert. Im hier gezeigten Ausführungsbeispiel ist die dritte Federkraft 21 vom Betrag her genauso groß, wie die zweite Federkraft 19, nur entgegengerichtet.

Die Klemmfeder 16 ist als Wellenfeder 34 ausgebildet und an einer Umfangsstelle geschlitzt; die Druckfeder 18 ist als Schraubendruckfeder 35 ausgebildet. Sowohl die Klemmfeder 16 als auch die Druckfeder 98 bestehen hier aus einem metallischen Werkstoff.

Die Klemmscheibe 15 und die Klemmfeder 16, die die erste Federkraft 17 aufweist, sind im Spalt 12 angeordnet. Die Klemmscheibe 15 befindet sich in axialer Richtung zwischen der Klemmfeder 16 und der Membran 13, wobei die erste Federkraft 17 der Klemmfeder 16 während der bestimmungsgemäßen Verwendung des Hydrolagers im Wesentlichen konstant ist.

Die Betätigung der Schaltvorrichtung 14 erfolgt dadurch, dass der zweiten Federkraft 19 der Druckfeder 18 die dritte Federkraft 21 der Unterdruckdose 20 überlagert wird. Die dritte Federkraft 21 wirkt in gleicher Richtung wie die erste Federkraft 17.

Die erste Federkraft 17 beträgt z. B. 50 Newton, die zweite Federkraft 19 z. B. 100 Newton und die dritte Federkraft 21 der Steuerdruckdose 20 ebenfalls 100 Newton.

Die einzige Kraft, die einstellbar ist, ist die dritte Federkraft 21 und zwar zwischen 0 und 100 Newton, abhängig vom in der Unterdruckdose 20 herrschenden Unterdruck. Dadurch, dass die dritte Federkraft 21 maximal 100 Newton beträgt und der zweiten Federkraft 19 der Druckfeder 18 entgegen gerichtet ist, hebt die Unterdruckdose 20 bei maximal anliegendem Unterdruck die zweite Federkraft 19 vollständig auf. Wirksam ist dann nur noch die erste Federkraft 17, mit der die Klemmfeder 16 die Membran 13 innerhalb des Düsenkäfigs 9 arretiert.

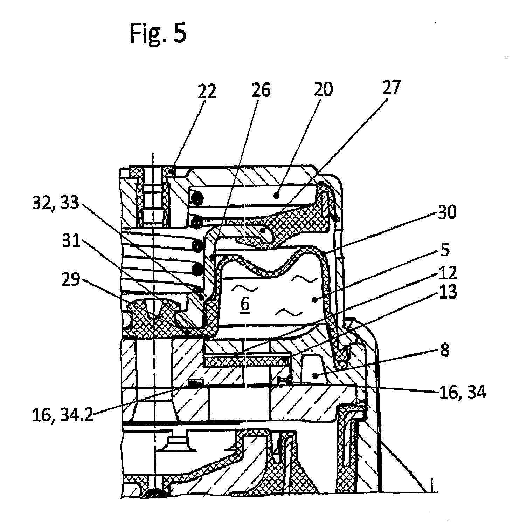

Die Klemmfeder 16, die in den Figuren 1 bis 4 und 6 durch eine Wellenfeder 34 und in Figur 5 durch zwei funktionstechnisch parallel geschaltete Wellenfedern 34, 34.2 gebildet ist, ist in die Klemmscheibe 15 integriert.

In den Figuren 1 und 2 weist das Hydrolager einen externen Druckanschlag auf. Das bedeutet, dass nicht der Lagerkern des Traglagers 1, sondern ein im Durchmesser weiter außen liegender Zwischenring zuerst am Düsenkäfig 9 anschlägt. Damit bleibt dem Lagerkern ein zusätzlicher Weg des inneren Bereichs der Tragfeder 3, so dass das Hydrolager zwar dynamisch härter wird, aber ein Teil der Isolationswirkung der Tragfeder 3 bleibt erhalten.

In den Figuren 3 und 4 weist das Hydrolager demgegenüber einen internen Druckanschlag auf. Das bedeutet, dass der Lagerkern des Traglagers 1 zuerst gegen den Düsenkäfig 9 anschlägt. Damit wird der Federabschnitt der Tragfeder 3 zwischen Lagerkern und Zwischenring entlastet und geschont. Die möglichen Motorbewegungen sind dabei relativ klein. Dies wird genutzt, wenn ein großer Motor in einen vergleichsweise kleinen Motorraum eingebaut wird, um zu verhindern, dass der Motor an die Karosserie schlägt und Bauteile beschädigt werden.

Bei dieser Gestaltung ist es sehr gut möglich, die Klemmfeder 16/Wellenfeder 34 auf den kleinstmöglichen Durchmesser auszulegen. Die für die Klemmfeder 16/Wellenfeder 34 benötigte Ringsfläche wird minimiert, so dass mehr Platz für die Offenfläche der Membran 13 bleibt. Durch die große wirksame Offenfläche der Membran 13 wird eine gute Akustik erreicht; die Klemmfeder 16/Wellenfeder 34 hat auf die Größe der Offenfläche keinen Einfluss.

Fig. 5 zeigt einen Ausschnitt aus einem dritten Ausführungsbeispiel eines nicht-geschalteten Hydrolagers mit internem Druckanschlag, bei dem für große Hydrolager-Durchmesser zumindest zwei Klemmfedern 16, 16.2/Wellenfedern 34, 34.2 in einer funktionstechnischen Parallelschaltung angeordnet sind. Eine solche Ausgestaltung ist von Vorteil, wenn sehr große Klemmkräfte für die Membran 13 nötig sind.

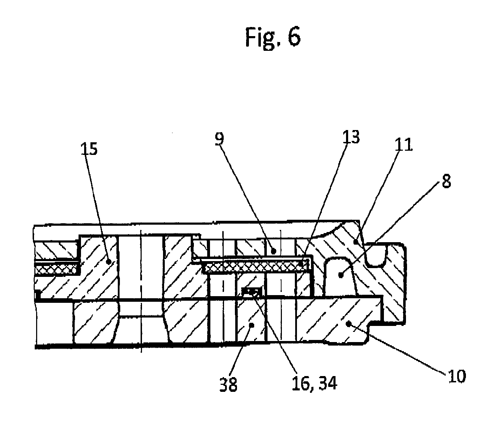

Fig. 6 zeigt einen Ausschnitt aus einem vierten Ausführungsbeispiel, bei dem im Lochbild des Düsenkäfigs 9 ein umlaufender Steg 38 vorgesehen ist, der zur Abstützung der Wellenfeder 34 dient.

## Patentansprüche

1. Hydrolager, umfassend ein Traglager (1) und ein Auflager (2), die durch eine im Wesentlichen hohlkegelförmig ausgebildete Tragfeder (3) aus einem gummielastischen Werkstoff miteinander verbunden sind und einen Arbeitsraum (4) und einen Ausgleichsraum (5), die mit Dämpfungsflüssigkeit (6) gefüllt und auf ihren einander axial zugewandten Seiten durch eine Trennwand (7) räumlich voneinander getrennt und durch einen in der Trennwand (7) angeordneten Dämpfungskanal (8) flüssigkeitsleitend miteinander verbunden sind, wobei die Trennwand (7) als Düsenkäfig (9) ausgebildet ist, mit zwei mit axialem Abstand benachbart zueinander angeordneten Düsenscheiben (10, 11), wobei in dem durch den Abstand gebildeten Spalt (12) eine Membran (13) aus einem gummielastischen Werkstoff angeordnet ist und wobei die Beweglichkeit der Membran (13) durch eine Schaltvorrichtung (14) schaltbar ist, **wobei** die Schaltvorrichtung (14) eine Klemmscheibe (15) und eine Klemmfeder (16) mit einer ersten Federkraft (17) umfasst, die im Spalt (12) angeordnet sind, wobei die Klemmscheibe (15) axial benachbart zur Membran (13) angeordnet ist, wobei die Klemmfeder (16) auf der der Membran (13) axial abgewandten Seite der Klemmscheibe (15) angeordnet ist und mit dieser in einer Wirkverbindung steht und wobei die Klemmscheibe (15) durch die Klemmfeder (16) zur Arretierung der Membran (13) an die Membran (13) anlegbar ist, **dadurch gekennzeichnet, dass** die Klemmfeder (16) als kreisringförmige Wellenfeder (34) ausgebildet ist und dass die Wellenfeder (34) an einer Umfangsstelle geschlitzt ausgebildet ist.

2. Hydrolager nach Anspruch 1, **dadurch gekennzeichnet, dass** die Klemmfeder (16) durch zumindest zwei kreisringförmig ausgebildete Wellenfedern (34, 34.2) gebildet ist und dass die Wellenfedern (34, 34.2) in einer funktionstechnischen Parallelschaltung angeordnet sind.

3. Hydrolager nach einem der Ansprüche 1 oder 2, **dadurch gekennzeichnet, dass** die Schaltvorrichtung (14) eine Druckfeder (18) mit einer zweiten Federkraft (19) umfasst, dass die zweite Federkraft (19) der ersten Federkraft (17) entgegen gerichtet ist und dass die Druckfeder (18) auf der der Klemmfeder (16) axial abgewandten Seite der Klemmscheibe (15) angeordnet ist und mit der Klemmscheibe (15) in einer Wirkverbindung steht.

4. Hydrolager nach einem der Ansprüche 1 bis 3, **dadurch gekennzeichnet, dass** die Schaltvorrichtung (14) als Betätigungsvorrichtung eine Unterdruckdose (20) mit einer dritten Federkraft (21) und mit einem Unterdruckanschluss (22) umfasst, dass die Unterdruckdose (20) auf der der Trennwand (7) axial abgewandten Seite des Ausgleichsraums (5) angeordnet ist und dass die dritte Federkraft (21), zur zumindest teilweisen Aufhebung der zweiten Federkraft (19), der zweiten Federkraft (19) entgegen gerichtet ist.

5. Hydrolager nach Anspruch 4, **dadurch gekennzeichnet, dass** die Unterdruckdose (20) auf der der Klemmscheibe (15) axial zugewandten Seite durch eine ringförmige Stellfeder (23) aus gummielastischem Werkstoff und auf der der Klemmscheibe (15) axial abgewandten Seite durch einen Lagerdeckel (24) begrenzt ist.

6. Hydrolager nach Anspruch 5, **dadurch gekennzeichnet, dass** der Lagerdeckel (24) eine erste Ausnehmung (25) aufweist, in der der Unterdruckanschluss (22) angeordnet ist.

7. Hydrolager nach einem der Ansprüche 3 bis 6, **dadurch gekennzeichnet, dass** die Druckfeder (18) in der Unterdruckdose (20) angeordnet und auf der der Klemmscheibe (15) axial zugewandten Seite von einem Stütztopf (26) umschlossen ist.

8. Hydrolager nach Anspruch 7, **dadurch gekennzeichnet, dass** der Stütztopf (26) einen kreisringförmigen Bund (27) aufweist, der die Öffnung (28) des Stütztopfs (26) umfangsseitig umschließt.

9. Hydrolager nach Anspruch 8, **dadurch gekennzeichnet, dass** der Bund (27) aussenumfangsseitig mit dem Innenumfang der Stellfeder (23) gasdicht verbunden ist und dass die Stellfeder (23) aussenumfangsseitig mit dem Lagerdeckel (24) gasdicht verbunden ist.

10. Hydrolager nach einem der Ansprüche 7 bis 9, **dadurch gekennzeichnet, dass** der Stütztopf (26) zumindest auf seiner der Unterdruckdose (20) axial abgewandten Seite von einer Abdeckung (29) aus gummielastischem Werkstoff abgedeckt ist, die die der Klemmfeder (16) axial abgewandte Stirnseite der Klemmscheibe (15) unmittelbar anliegend berührt.

11. Hydrolager nach Anspruch 10, **dadurch gekennzeichnet, dass** die Abdeckung (29) einstückig ineinander übergehend und materialeinheitlich mit einer rollbalgförmigen Abschlussmembran (30) ausgebildet ist, die den Ausgleichsraum (5) auf der der Trennwand (7) axial abgewandten Seite begrenzt.

12. Hydrolager nach einem der Ansprüche 10 oder 11, **dadurch gekennzeichnet, dass** die Abdeckung (29) mit dem Boden (31) des Stütztopfs (26) formschlüssig verbunden ist.

13. Hydrolager nach einem der Ansprüche 10 bis 12, **dadurch gekennzeichnet, dass** die Abdeckung (29) einen pilzförmig ausgebildeten Rastvorsprung (32) aufweist, der sich in axialer Richtung erstreckt und dass der Rastvorsprung (32) in eine zweite Ausnehmung (33) im Boden (31) des Stütztopfs (26) einschnappbar ist.

14. Hydrolager nach einem der Ansprüche 3 bis 13, **dadurch gekennzeichnet, dass** die Druckfeder (18) als Schraubendruckfeder (35) ausgebildet ist.

15. Hydrolager nach einem der Ansprüche 1 bis 14, **dadurch gekennzeichnet, dass** die Klemmfeder (16) und/oder die Druckfeder (18) aus einem metallischen Werkstoff bestehen.

## Claims

1. A hydromount, comprising a carrying mount (1) and a support mount (2), which are connected to each other by a supporting spring (3) of rubber-elastic material configured substantially in a hollow-cone shape, and a working chamber (4) and an equalisation chamber (5), which are filled with damping liquid (6) and are spatially separated from each other on their axially facing sides by a partition wall (7) and are connected to each other in a liquid-conducting manner by a damping channel (8) disposed in the partition wall (7), wherein the partition wall (7) is configured as an orifice cage (9) with two orifice discs (10, 11) disposed adjacent to each other with an axial spacing, wherein a membrane (13) of a rubber-elastic material is disposed in the gap (12) formed by the spacing, and wherein the capability of the membrane (13) to move can be switched by means of a switching device (14), wherein the switching device (14) has a clamping disc (15) and a clamping spring (16) with a first spring force (17) that are disposed in the gap (12), wherein the clamping disc (15) is disposed axially adjacent to the membrane (13), wherein the clamping spring (16) is disposed on the side of the clamping disc (15) facing axially away from the membrane (13) and is operatively connected thereto, and wherein the clamping disc (15) can be made to abut against the membrane (13) by means of the clamping spring (16) in order to lock the membrane (13), **characterised in that** the clamping disc (16) is configured as a circular-annular wave spring (34) and that the wave spring (34) is configured in a slit manner at a point in the circumference.

2. The hydromount according to claim 1, **characterised in that** the clamping spring (16) is formed by at least two circular-annularly configured wave springs (34, 34.2) and that the wave springs (34, 34.2) are arranged in a functional parallel connection.

3. The hydromount according to any one of the claims 1 or 2, **characterised in that** the switching device (14) comprises a compression spring (18) with a second spring force (19), that the second spring force (19) is directed opposite to the first spring force (17) and that the compression spring (18) is disposed on the side of the clamping disc (15) facing axially away from the clamping spring (16) and is operatively connected to the clamping disc (15).

4. The hydromount according to any one of the claims 1 to 3, **characterised in that** the switching device (14) comprises, as an actuating device, a vacuum actuator (20) with a third spring force (21) and with a vacuum port (22), that the vacuum actuator (20) is disposed on the side of the equalisation chamber (5) facing axially away from the partition wall (7), and that the third spring force (21) is directed opposite to the second spring force (19) for at least partially compensating the second spring force (19).

5. The hydromount according to claim 4, **characterised in that** the vacuum actuator (20) is limited, on the side facing axially towards the clamping disc (15), by an annular adjusting spring (23) made of a rubber-elastic material, and, on the side facing axially away from the clamping disc (15), by a bearing cap (24).

6. The hydromount according to claim 5, **characterised in that** the bearing cap (24) comprises a first recess (25) in which the vacuum port (22) is disposed.

7. The hydromount according to any one of the claims 3 to 6, **characterised in that** the compression spring (18) is disposed in the vacuum actuator (20) and enclosed, on the side facing axially towards the clamping disc (15), by a support pot (26).

8. The hydromount according to claim 7, **characterised in that** the support pot (26) comprises a circular-annular flange (27) circumferentially enclosing the opening (28) of the support pot (26).

9. The hydromount according to claim 8, **characterised in that** the flange (27), on the side of the outer circumference, is connected in a gas-tight manner to the inner circumference of the adjusting spring (23) and that the adjusting spring (23), on the side of the outer circumference, is connected in a gas-tight manner to the bearing cap (24).

10. The hydromount according to any one of the claims 7 to 9, **characterised in that** the support pot (26), at least on the side thereof facing axially away from the vacuum actuator (20), is covered by a cover (29) made of a rubber-elastic material, which contacts the end face of the clamping disc (15) facing axially away from the clamping spring (16) in a directly abutting manner.

11. The hydromount according to claim 10, **characterised in that** the cover (29) is configured so as to integrally merge with and be made of the same material as a cover membrane (30) in the form of an air bellows, which delimits the equalisation chamber (5) on the side facing axially away from the partition wall (7).

12. The hydromount according to any one of the claims 10 or 11, **characterised in that** the cover (29) is positively connected to the bottom (31) of the support pot (26).

13. The hydromount according to any one of the claims 10 to 12, **characterised in that** the cover (29) has a latching projection (32) configured in the shape of a mushroom, which extends in the axial direction, and that the latching projection (32) can be snapped into a second recess (33) in the bottom (31) of the support pot (26).

14. The hydromount according to any one of the 3 to 13, **characterised in that** the compression spring (18) is configured as a helical compression spring (35).

15. The hydromount according to any one of the claims 1 to 14, **characterised in that** the clamping spring (16) and/or the compression spring (18) are made of a metallic material.

## Revendications

1. Support hydraulique, comprenant un bloc-support (1) et un élément en appui (2), qui sont reliés l'un à l'autre par un ressort portant (3), réalisé sensiblement en forme de cône creux en un matériau présentant l'élasticité du caoutchouc, et comprenant une chambre de travail (4) et une chambre d'égalisation (5), remplies d'un liquide d'amortissement (6) et séparées l'une de l'autre dans l'espace par une cloison de séparation (7) sur leurs côtés tournés axialement l'une vers l'autre, qui sont reliées l'une à l'autre de manière à laisser passer un liquide à travers un canal d'amortissement (8) ménagé dans la cloison de séparation (7), dans lequel la cloison de séparation (7) est réalisée à la manière d'une cage à buses (9) avec deux plaques à buses (10, 11) agencées voisines l'une de l'autre avec une distance axiale, dans lequel une membrane (13) en un matériau présentant l'élasticité du caoutchouc est agencée dans l'intervalle (12) formé par la distance, et dans lequel la mobilité de la membrane (13) est susceptible d'être commutée par un dispositif de commutation (14), dans lequel le dispositif de commutation (14) comprend une plaque de serrage (15) et un ressort de serrage (16) présentant une première force élastique (17), qui sont agencés dans l'intervalle (12), dans lequel la plaque de serrage (15) est agencée axialement au voisinage de la membrane (13), dans lequel le ressort de serrage (16) est agencé sur le côté de la plaque de serrage (15) axialement détourné de la membrane (13) et se trouve en liaison d'action avec la plaque de serrage, et dans lequel la plaque de serrage (15) peut être appliquée contre la membrane (13) par le ressort de serrage (16) en vue de bloquer la membrane (13), **caractérisé en ce que** le ressort de serrage (16) est réalisé à la manière d'un ressort ondulé (34) en forme d'anneau circulaire, et **en ce que** le ressort ondulé (34) est réalisé fendu un emplacement de sa périphérie.

2. Support hydraulique selon la revendication 1, **caractérisé en ce que** le ressort de serrage (16) est formé par au moins deux ressorts ondulés (34, 34.2) réalisés en forme d'anneau circulaire, et **en ce que** les ressorts ondulés (34, 34.2) sont agencés dans un montage parallèle sur le plan fonctionnel.

3. Support hydraulique selon l'une des revendications 1 ou 2, **caractérisé en ce que** le dispositif de commutation (14) inclut un ressort de compression (18) avec une seconde force élastique (19), **en ce que** la seconde force élastique (19) est dirigée à l'opposé de la première force élastique (17), et **en ce que** le ressort de compression (18) est agencé sur le côté de la plaque de serrage (15) axialement détourné du ressort de serrage (16), et se trouve en liaison d'action avec la plaque de serrage (15).

4. Support hydraulique selon l'une des revendications 1 à 3, **caractérisé en ce que** le dispositif de commutation (14) inclut, à titre de dispositif d'actionnement, une boîte à dépression (20) avec une troisième force élastique (21) est un raccord à dépression (22), **en ce que** la boîte à dépression (20) est agencée sur le côté de la chambre d'égalisation (5) axialement détourné de la cloison de séparation (7), et **en ce que**, pour annuler au moins partiellement la seconde force élastique (19), la troisième force élastique (21) est dirigée à l'opposé de la seconde force élastique (19).

5. Support hydraulique selon la revendication 4, **caractérisé en ce que**, du côté tourné axialement vers la plaque de serrage (15), la boîte à dépression (20) est délimitée par un ressort de positionnement annulaire (23) en un matériau présentant l'élasticité du caoutchouc, et du côté détourné axialement de la plaque de serrage (15) la boîte à dépression (20) est délimitée par un couvercle de support (24).

6. Support hydraulique selon la revendication 5, **caractérisé en ce que** le couvercle de support (24) comporte un évidement (25) dans lequel est agencé le raccord à dépression (22).

7. Support hydraulique selon l'une des revendications 3 à 6, **caractérisé en ce que** le ressort de compression (18) est agencé dans la boîte à dépression (20), et est entouré par un godet de soutien (26) sur le côté axialement tourné vers la plaque de serrage (15).

8. Support hydraulique selon la revendication 7, **caractérisé en ce que** le godet de soutien (26) comporte une collerette de forme annulaire (27), qui entoure du côté périphérique l'ouverture (28) du godet de soutien (26).

9. Support hydraulique selon la revendication 8, **caractérisé en ce que** la collerette (27) est reliée du côté de sa périphérie extérieure de manière étanche aux gaz avec la périphérie intérieure du ressort de positionnement (23), et **en ce que** le ressort de positionnement (23) est relié du côté de sa périphérie extérieure de manière étanche aux gaz avec le couvercle de support (24).

10. Support hydraulique selon l'une des revendications 7 à 9, **caractérisé en ce que** le godet de soutien (26) est recouvert, sur son côté axialement détourné de la boîte à dépression (20), par une couverture (29) en un matériau présentant l'élasticité du caoutchouc, qui est directement en contact avec la face frontale de la plaque de serrage (15) axialement détournée du ressort de serrage (16).

11. Support hydraulique selon la revendication 10, **caractérisé en ce que** la couverture (29) est réalisée d'une seule pièce avec une membrane de fermeture (30) en forme de soufflet déroulant, en un matériau unitaire et de manière à se transformer l'une dans l'autre, membrane qui délimite la chambre d'égalisation (5) sur le côté axialement détourné de la cloison de séparation (7).

12. Support hydraulique selon l'une des revendications 10 ou 11, **caractérisé en ce que** la couverture (29) est reliée par coopération de formes avec le fond (31) du godet de soutien (26).

13. Support hydraulique selon l'une des revendications 10 à 12, **caractérisé en ce que** la couverture (29) comprend une saillie d'enclenchement (32) réalisée en forme de champignon, qui s'étend en direction axiale, et **en ce que** la saillie d'enclenchement (32) est susceptible de venir s'encliqueter dans un second évidement (33) dans le fond (31) du godet de soutien (26).

14. Support hydraulique selon l'une des revendications 3 à 13, **caractérisé en ce que** le ressort de compression (18) est réalisé sous la forme d'un ressort de compression hélicoïdal (35).

15. Support hydraulique selon l'une des revendications 1 à 14, **caractérisé en ce que** le ressort de serrage (16) et/ou le ressort de compression (18) sont en un matériau métallique.
